# EUROPÄISCHE PATENTSCHRIFT

(11) **EP 1 261 472 B1**
(45) Veröffentlichungstag und Bekanntmachung des Hinweises auf die Patenterteilung: **28.12.2005**
(21) Anmeldenummer: 01900022.3
(22) Anmeldetag: 09.01.2001
(51) Int. Cl.: B29C 49/76, B29C 49/58

(54) **VORRICHTUNG UND VERFAHREN ZUR HERSTELLUNG VON HOHLKÖRPERN AUS KUNSTSTOFF**
DEVICE AND METHOD FOR PRODUCING HOLLOW PLASTIC BODIES
DISPOSITIF ET PROCEDE DE FABRICATION DE CORPS CREUX EN PLASTIQUE

(30) Priorität: 22.02.2000 CH 337002000
(43) Veröffentlichungstag der Anmeldung: 04.12.2002
(73) Patentinhaber: SOPLAR SA, CH-9450 Altstätten (CH)
(72) Erfinder: DÜRINGER, Markus, A-6972 Fussach (AT)
(74) Vertreter: Schreiber, Wolfgang
(86) Internationale Anmeldenummer: PCT/CH2001/000016
(87) Internationale Veröffentlichungsnummer: WO 2001/062472

(56) Entgegenhaltungen:
- EP-A- 0 373 115
- DE-A- 19 732 905
- DE-A- 19 846 594
- US-A- 4 871 492

## Beschreibung

Die Erfindung betrifft eine Vorrichtung zur Herstellung von Hohlkörpern aus thermoplastischem Kunststoff gemäss dem Oberbegriff des Patentanspruchs 1. Die Erfindung betrifft auch ein Verfahren zur Herstellung von Blasformwerkzeugen aus einem thermoplastischen Kunststoff gemäss dem Oberbegriff des unabhängigen Verfahrensanspruchs 13.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Öl, Reinigungsutensilien, Kosmetika usw., kommen hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die Herstellung von Kunststoffbehältnissen, insbesondere Kunststoffflaschen, erfolgt im Extrusionsblasverfahren, insbesondere in einem Hohlkörperblasverfahren, beispielsweise in einem Schlauchblasverfahren. Dabei wird ein ein- oder mehrschichtig extrudierter Vorformling, beispielsweise ein Schlauch, in Blasformwerkzeuge eingebracht, über einen Blasdorn durch Überdruck aufgeblasen und durch Kühlung ausgehärtet. Die dafür eingesetzten Blasformautomaten weisen dabei in der Regel mehrere parallel geschaltete Blasformwerkzeugen auf, die es erlauben, in einem Arbeitsgang gleichzeitig mehrere Kunststoffbehältnisse herzustellen. Dabei ist jedem Blasformwerkzeug ein separater Blasdorn zugeordnet, der prozessgerecht zustellbar ist.

Hohlkörper aus Kunststoff, wie z. B. Flaschen oder Kanister, aber auch technische Teile besitzen in vielen Fällen eine oder mehrere Öffnungen, die bei der späteren Verwendung einen bestimmten Zweck erfüllen. Vielmals werden derartige Öffnungen derart ausgebildet, dass sie durch geeignete Schliessvorrichtungen verschliessbar sind. Dies können beispielsweise Schraub- oder Schnappverschlüsse sein. Eine wesentliche Anforderung an die Verschliesstechnik ist dabei die Dichtheit gegenüber Flüssigkeiten, Gasen und festen Stoffen in pulvriger oder körniger Form. Bei Kunststoffverpackungen wird die Dichtheit überlicherweise dadurch bewerkstelligt, dass sowohl beim Hohlköper alsauch beim Verschluss glatte, massgenaue und aufeinander abgestimmte Dichtflächen erzeugt werden. Durch die Wahl der richtigen Materialkombination von Hohlkörper und Verschluss kann dabei bekanntermassen die Dichtungsqualität noch weiter verbessert werden.

Die Herstellung derartig gestalteter Öffnungen erfolgt üblicherweise gleichzeitig mit dem Herstellungsprozess des Hohlkörpers. Dabei wird die Öffnung für das Einbringen des den Überdruck erzeugenden Aufblasmediums, in den meisten Fällen Druckluft, gleich derart gestaltet, dass sie auch den späteren Anforderungen an die Benützung des Hohlkörpers genügt. In diesen Fällen müssen die Dichtflächen, die sowohl an der Stirnfläche als auch an der vorzugsweise zylindrischen oder konischen Innenwandung eines die Öffnung bcrandenden Halses vorgesehen sein können, hergestellt werden. Dies erfolgt in einem sogenannten Kalibriervorgang, also durch eine massliche Abstimmung eines Teilbereichs des als Kalibriereinrichtung wirkenden Blasdorns mit dem Mündungsbereich der Blasformwerkzeuge und der vorgegebenen Wandstärke des in die Blasformwerkzeuge eingesetzten Vorformlings. Der Blas- und Kalibrierdorn hat darüber hinaus auch die Aufgabe, prozessbedingte, überstehende Teile des Vorformlings im oberen Randbereich der Mündung bis auf eine minimale Restdicke vom Hohlkörper abzuquetschen, damit diese in einem dem Aufblasvorgang nachgeschalteten Entgratungsprozess einwandfrei abgestanzt werden können.

Für beide Vorgänge, das Kalibrieren der Öffnung und das Abquetschen überstehender Teile, ist es erforderlich, dass der Blas- und Kalibrierdorn in drei Ebenen eine sehr genaue und reproduzierbare Position gegenüber der Mündung des Blasformwerkzeugs einnimmt. Insbesondere muss die Achse des Blas- und Kalibrierdoms mit der Mündungsachse der Kavität im Blasformwerkzeug übereinstimmen; die Schneidringfläche des Blas- und Kalibrierdorns muss parallel zur Halsmesserfläche des Blasformwerkzeug sein und die Höhen-Endposition des Blas- und Kalibrierdoms muss gegenüber der Mündung des Blasformwerkzeugs immer exakt diejenige Stellung einnehmen, bei der sowohl die Abmessungstoleranzen des fertigen Hohlkörpers eingehalten werden als auch das Abquetschen der überstehenden Teile gewährleistet ist. In der Praxis wird dies durch Einstellen eines mechanischen Endanschlags für den Blas- und Kalibrierdorn erreicht. Die Einstellung erfolgt dabei manuell, nach Massgabe einer optischen Beurteilung des Abquetschvorgangs und der masslichen Kontrolle der Mündung des Hohlkörpers durch das Bedienpersonal. Bei einer Einfach-Blasvorrichtung, die nur einen einzigen Blas- und Kalibrierdorn aufweist, sind die beiden Qualitätsanforderungen bezüglich der Öffnung bzw. bezüglich der überstehenden Teile noch relativ einfach gleichzeitig erfüllbar. Bei Blasformautomaten mit mehreren parallel angeordneten Blasformwerkzeugen und diesen zugeordneten Blas- und Kalibrierdornen ist der Einstellvorgang jedoch nur sehr schwierig und zeitaufwendig zu bewerkstelligen. Mit Hinblick auf die Qualitätsanforderungen an den Abquetschvorgang müssen die einzelnen Blas- und Kalibrierdorne alle auf die richtige Höhe in Bezug auf die Mündungen der Kavitäten in den Blasformwerkzeugen eingestellt werden. Dabei ist zu berücksichtigen, dass Massunterschiede an den Mündungen der einzelnen Blasformwerkzeuge, die allein schon durch die üblichen Fertigungstoleranzen oder durch die Abnutzung bedingt sind, unterschiedliche Höheneinstellungen der Blas- und Kalibrierdorne erzwingen. Wegen der Verletzungsgefahr des Bedienpersonals sind die mechanisch miteinander zusammenwirkenden Bestandteile dieser Mehrfach-Blasautomaten durch Abdeckvorrichtungen vor einem unbefugten oder auch unbeabsichtigten Zugriff geschützt. Diese baulichen Schutzmassnahmen stehen jedoch einer praktikablen Einstellmöglichkeit, die mit Vorteil an der laufenden Maschine erfolgen soll, entgegen.

Aus der DE-A-197 32 905 ist eine Blasvorrichtung bekannt, bei der die Blasdorne durch Schraubendruckfedern in ihre Grundstellung vorgespannt sind. Radial wirkende Klemmvorrichtungen sind durch Strömungsmitteldruck, beispielsweise hydraulisch, betätigbar. Nach dem hydraulischen Lösen der Klemmvorrichtungen ist jeder Blasdorn separat, gegen die Rückstellkraft seiner Vorspannfeder höhenverstellbar. Die Fixierung der Blasdorne erfolgt durch hydraulische Betätigung der Klemmvorrichtungen.

In der US-A-4,871,492 ist eine axiale und radiale Ausrichtung der Blasdorne bezüglich der Blasformkavitäten beschrieben. Die axiale Höhenverstellung erfolgt gegen die Rückstellkraft von Vorspannfedern. Mechanische Klemmeinrichtungen dienen zur Fixierung der Blasdome.

Aus der EP-A-0 373115 ist ein Extrusionskopf mit einem verstellbaren Ringspalt zur Extrusion eines Schlauches beschrieben. Die Veröffentlichungsschrift gibt keinerlei Hinweis auf die Ausbildung einer Blaseinrichtung mit mehreren Blasdornen.

Aufgabe der vorliegenden Erfindung ist es daher, diesen Nachteilen der Vorrichtungen des Stands der Technik abzuhelfen. Es soll eine Vorrichtung zur Herstellung von Hohlkörpern aus Kunststoff geschaffen werden, bei der die Einstellvorgänge vereinfacht sind und eine sichere, störungsfreie Produktion von Hohlkörpern, insbesondere von Kunststoffflaschen und dergleichen Behältnissen, in der gewünschten Qualität ermöglicht ist.

Die Lösung dieser Aufgaben besteht in einer Vorrichtung zur Herstellung von Hohlkörpern aus thermoplastischem Kunststoff, welche die im kennzeichnenden Abschnitt des Patentanspruchs 1 angeführten Merkmale aufweist. Besonders bevorzugte Ausführungsvarianten und/oder Weiterbildungen der Erfindung sind Gegenstand der abhängigen Vorrichtungsansprüche. Die gestellten Aufgaben werden auch durch das im unabhängigen Verfahrensanspruch 13 definierte Verfahren gelöst. Bevorzugte Varianten der Verfahrensführung sind jeweils Gegenstand der abhängigen Verfahrensansprüche.

Eine Vorrichtung zur Herstellung von Hohlkörpern, insbesondere Flaschen und dergleichen mit einer Entleeröffnung versehenen Behältnissen, aus thermoplastischem Kunststoff umfasst ein Maschinenunterteil und ein balkenartiges Maschinenoberteil. Das Maschinenunterteil ist mit wenigstens zwei, jeweils mit einer Kavität versehenen Blasformwerkzeugen ausgestattet. Am oberhalb des Maschinenunterteils angeordneten, balkenartigen Maschinenoberteil ist eine der Zahl der Blasformwerkzeuge entsprechende Anzahl von Blas- und Kalibrierdornen angeordnet. Dabei ist jeder Blas- und Kalibrierdorn einem Blasformwerkzeug zugeordnet. Die Blas- und Kalibrierdorne sind gemeinsam axial auf die Blasformwerkzeuge zustellbar und mit ihrem Kalibrierbereich in eine Mündung der Kavität einfahrbar, bis eine Ringschulter an den Blas- und Kalibrierdornen in Anlage zu einer Gegenfläche am jeweils zugeordneten Blasformwerkzeug kommt. Erfindungsgemäss sind die Blas- und Kalibrierdorne innerhalb vorgebbarer Grenzen axial frei beweglich im Maschinenoberteil gehaltert. Beim gemeinsamen Zustellen der Blas- und Kalibrierdorne gegen die Blasformwerkzeuge sind die Blas- und Kalibrierdorne gegen den Widerstand eines Kopplungsmittels automatisch gegenüber ihrer Ausgangsstellung axial höhenverstellbar.

Indem die Blas- und Kalibrierdorne im Maschinenoberteil axial begrenzt verstellbar gelagert und beim Zustellvorgang auf die Blasformwerkzeuge automatisch höhenverstellbar sind, entfällt der mühsame manuelle Einstellvorgang. Durch die Selbsteinstellung der Blas- und Kalibrierdorne ist gewährleistet, dass die umlaufenden Ringschultern an allen Blas- und Kalibrierdornen mit der gleichen Anpresskraft gegen die zugeordneten Gegenflächen an den Blasformwerkzeugen gepresst werden. Damit muss nur die Zustelleinrichtung für alle Blas- und Kalibrierdorne einmal eingcrichtet werden, um ein sauberes Abquetschen überstehenden Materials des Vorformlings zu gewährleisten. Die Selbsteinstellung der Blas- und Kalibrierdorne erfolgt automatisch, gegen die Rückstellkraft von Kopplungsmitteln. Einmal selbstätig bezüglich der Höhe eingestellt, sorgt die Halterung der Blas- und Kalibrierdorne dafür, dass die korrekte Einstellung beibehalten wird. Andererseits behindert die Haltekraft der Halterungen eine automatische Nachjustierung, beispielsweise aufgrund eines im Dauerbetrieb auftretenden, langsamen Verschleisses der zusammenwirkenden Flächen, nicht. Als zusätzlicher Effekt der in gewissem Masse elastischen Verstellbarkeit tritt eine Dämpfung des Zustellvorgangs auf, die sich vorteilhaft auf den Verschleiss der zusammenwirkenden Ringschultern und Gegenflächen auswirkt.

In einer vorteilhaften Variante der Erfindung sind die Blas- und Kalibrierdorne hydraulisch miteinander gekoppelt. Durch die hydraulische Kopplung der Blas- und Kalibrierdorne sind der Druckausgleich und die Höhenverstellbarkeit der Blas- und Kalibrierdorne sehr einfach regelbar. Die hydraulisch gekoppelten Blas- und Kalibrierdorne wirken mit Stellkolben zusanimen, die innerhalb von Bohrungen im Maschinenoberteil begrenzt axial verschiebbar sind. Die Kolben sind durch eine innerhalb eines mit den Bohrungen in Verbindung stehenden Reservoirs angeordnete Hydraulikflüssigkeit miteinander kurzgeschlossen, welche das Kopplungsmittel bildet. Durch die erfindungsgemässe Anordnung sind alle Blas- und Kalibrierdorne über ein kommunizierendes Gefäss miteinander verbunden. Ab dem Zeitpunkt der Einwirkung einer Reaktionskraft kommt es zu einem Höhenausgleich, bis alle Blas- und Kalibrierdorne die gleiche Kraft auf ein Abquctschteil ausüben. Beispielsweise wird standardgemässes Hydrauliköl verwendet. Es kann eine Entgasungseinrichtung für das Hydrauliköl vorgesehen sein. Bei Abfüllung des Hydauliköls unter Luftabschluss, nach vorheriger Evakuation der Anlage kann eine Entgasungseinrichtung entfallen.

Damit den üblichen Fertigungstoleranzen, dem Verschleiss und den für verschiedene Materialien erforderlichen, unterschiedlich hohen Schneideinrichtungen Rechnung getragen werden kann, weisen die sich selbsttätig einstellenden Blas- und Kalibrierdorne eine axiale Höhenverstellbarkeit gegenüber ihrer Ausgangsstellung auf, die beispielsweise etwa ± 4 mm, in einer Variante der Erfindung vorzugsweise etwa ± 2,5 mm betragen kann. Selbstverständlich können auch grössere axiale Verstellbereiche vorgesehen sein.

Aus montagetechnischen Gründen und wegen der vereinfachten Wartung sind die Blas- und Kalibrierdorne lösbar im balkenartigen Maschinenoberteil gehaltert. Dabei sind sie mit Vorteil durch Klemmung in ihren Halterungen fixiert. Die Befestigung der Blas- und Kalibrierdorne durch Klemmung besitzt den Vorteil, dass auch Abweichungen vom Sollaussendurchmesser sehr einfach kompensierbar sind. Ein Verspannen, wie es insbesondere bei konventionellen Schraubhalterungen auftreten kann, wird vermieden.

Ein nicht unerheblicher Vorteil der Klemmhalterung besteht darin, dass diese die Möglichkeit bietet, die Blas- und Kalibrierdorne alle mit der gleichen Klemmkraft in ihren Halterungen zu fixieren; dies unabhängig von allfälligen Aussenmasstoleranzen. Die Klemmkraft ist dabei derart gewählt, dass die Blas- und Kalibrierdorne sich durch ihr Gewicht und die dynamischen Kräfte bei den Bewegungsvorgängen nicht unbeabsichtigt verstellen können, durch das Einwirken der hydraulischen Kräfte jedoch in der gewünschten Weise verstellen lassen. Das Herausfallen der Blas- und Kalibrierdorne aus dem Maschinenoberteil ist vorzugsweise durch Anschläge verhindert.

Eine sehr zweckmässige konstruktive Variante der Klemmhalterung umfasst eine mit einem Aussengewinde versehene Haltemutter, die in eine Gewindebohrung im Maschinenoberteil einschraubbar ist. Die Haltemutter besitzt eine Kegelfläche, die mit einem radial komprimierbaren Klemmelement, vorzugsweise einem mit einer konischen Gegenfläche versehenen, geschlitzten Kegel aus einem elastischen und verschleissfesten Material, vorzugsweise aus einem technischen Kunststoff, zusammenwirkt. Die zusammenwirkenden Kegelflächen lenken die vom Anzugsmoment der Haltemutter resultierende Kraft um und sorgen durch die radiale Verengung des Klemmelements für die erforderliche Klemmkraft.

Indem die Klemmhalterung ein Vorspannelement umfasst, sind Masstoleranzen und Ungleichmässigkeiten in der Gewindeausbildung der Gewindebohrung im Maschinenoberteil und an der Haltemutter ausgleichbar. Vorzugsweise ist das Vorspannelement von einer Tellerfeder gebildet, die sich im zusammengefügten Zustand einerseits in der Gewindebohrung und andererseits, gegebenenfalls unter Zwischenlage einer Unterlagscheibe, am Klemmelement abstützt. Die Unterlagscheibe hat den Vorteil, dass sich die Tellerfeder nicht in das etwas weichere, radial komprimierbare Klemmelement eingraben kann. Einer Fehllage der Tellerfeder wird dadurch zuverlässig entgegengewirkt.

Die schwebende Halterung der Blas- und Kalibrierdorne im Masclunenoberteil bietet auch Möglichkeit, diese um ihre Längsachse zu verdrehen, ohne dass sich eine der eingestellten axialen Positionen dabei verstellt. Dies ist beispielsweise bei Blas- und Kalibrierdornen von Vorteil, die im Kalibrierbereich einen von der Kreisform abweichenden Querschnitt aufweisen. Beispielsweise besitzen die Blas- und Kalibrierdorne einen Kalibrierbereich mit einem elliptischen Querschnitt.

Um Blas- und Kalibrierdorne mit Kalibrierbereichen, die einen von der Kreisform abweichenden Querschnitt aufweisen, leichter in die korrekte Lage in Bezug auf die Kavität im Blasformwerkzeug zu bringen, sind im Maschinenoberteil und an den Blas- und Kalibrierdornen Positioniermittel vorgesehen. Die Positioniermittel umfassen dabei vorzugsweise jeweils eine Umfangsrändelung oder -verzahnung am Blas- und Kalibrierdorn und einen von aussen betätigbaren Stellstift am oberen Maschinenteil. Die Umfangsrändelung oder -verzahnung kann eine gleichmässige oder auch eine unterschiedliche Teilung aufweisen, um den Blas- und Kalibrierdorn in vorgegebenen, auch grösseren Schritten verdreht zu justieren. Die Stellstifte dienen zur Festlegung der ausgerichteten Blas- und Kalibrierdorne in der eingestellten Position.

Die Anschlagschultern an den Blas- und Kalibrierdornen sind mit Vorteil an auswechselbar gehalterten Schneidringen vorgesehen. Die Schneidringe besitzten speziell gehärtete Kontaktflächen und Schneidkanten, damit der Abquetschvorgang sauber und zuverlässig erfolgt und der Verschleiss der zusammenwirkenden Bauteile möglichst gering gehalten werden kann. Die Auswechselbarkeit der Schneidringe ermöglicht bei Bedarf einen einfachen Ersatz oder eine einfache Anpassung an die Erfordernisse, beispielsweise aufgrund unterschiedlicher Wandstärken der Vorformlinge.

Mit Hinblick auf den modularen Aufbau und die unterschiedlichen Einsatzmöglichkeiten der Vorrichtung ist es auch von grossen Vorteil, wenn der kalibrierende Abschnitt des Blas- und Kalibrierdorns von einer austauschbaren Kalibrierhülse gebildet. Die Austauschbare Anordnung bietet die Möglichkeit, bei Bedarf durchmessergrössere Kalibrierhülsen oder Hülsen mit einem von der Kreisform abweichenden, beispielsweise elliptischen, Querschnitt an den Blas- und Kalibrierdornen zu befestigen, um die Vorrichtung sehr einfach auf die Erfordernisse des jeweils herzustellenden Hohlkörpers umzurüsten.

Bei einem Verfahren zur Herstellung von Hohlkörpern, insbesondere von Flaschen oder dergleichen mit einer Entleeröffnung versehenen Behältnissen, in einem Hohlkörperblasverfahren werden ein- oder mehrschichtig extrudierte Vorformlinge aus einem thermoplastischen Kunststoff, beispielsweise Abschnitte eines Schlauchs, in Blasformwerkzeuge eingebracht. Dann werden die herzustellenden Hohlkörper gleichzeitig, mittels eines jedem Blasformwerkzeug zugeordneten Blas- und Kalibrierdoms gemäss den von den Blasformwerkzeugen umschlossenen Kavitäten durch Überdruck aufgeblasen. Dabei werden die Entleeröffnungen der Hohlkörper kalibriert und über die Entleerstutzen überstehende Teile abgequetscht. Schliesslich werden die ausgeformten Hohlkörper durch Kühlung ausgehärtet. Erfindungsgemäss werden während des Abquetschvorgangs, bei dem eine umlaufende Ringschulter am Blas- und Kalibrierdorn jeweils gegen eine Gegenfläche am zugeordneten Blasformwerkzeug gepresst wird, die Blas- und Kalibrierdorne innerhalb vorgebbarer Grenzen gegen die rückstellende Kraft eines Kopplungsmittels automatisch gegenüber ihrer Ausgangslage axial höhenverstellt.

Die automatische Selbsteinstellung der Blas- und Kalibrierdorne erspart dem Bedienpersonal die umständliche, zeitaufwendige und in manchen Fällen auch nicht ungefährliche Einstellprozedur. Es genügt, wenn in einem einzelnen Justierschritt die Zustelleinrichtung am Maschinenoberteil eingestellt wird. Die selbsttätige Nachregelung der Höhe der Blas- und Kalibrierdorne sorgt dafür, dass die kritischen Wirkflächen an den umlaufenden Ringschultern der Blas- und Kalibrierdorne alle in der gleichen Höhe angeordnet sind, bzw. für eine gleichmässige Druckbeaufschlagung der Gegenflächen an den Mündungen der Kavitäten in den Blasformwerkzeuge.

Indem die Blas- und Kalibrierdorne durch eine im Federbereich betriebene Hydraulikflüssigkeit miteinander kurzgeschlossen werden, ist eine schonende Höhenverstellung und insbesondere gedämpfte Zuführung der Blas- und Kalibrierdorne zu den zugeordneten Blasformwerkzeugen gewährleistet. Der hydraulische Kurzschluss bewirkt einen Druckausgleich über die Anzahl der Blas- und Kalibrierdorne, der sich darin äusserst, dass einige der Blas- und Kalibrierdorne in die eine axiale Richtung verstellt werden, während die anderen zum Ausgleich in die entgegengesetzte Richtung verstellt werden.

Die Blas- und Kalibrierdorne werden mit Vorteil durch Klemmung in ihrer schwebenden Ausgangstellung am balkenartigen Maschinenoberteil gehalten. Die Halterung ist dabei lösbar ausgebildet. Entscheidend für den Druckausgleich über die Gesamtanzahl der Blas- und Kalibrierdorne ist dabei der Umstand, dass jeder Blas- und Kalibrierdorn mit der gleichen Klemmkraft gehalten wird. Die Klemmkraft wird mit Vorteil derart gewählt, dass die Blas- und Kalibrierdorne gegen ein unbeabsichtigtes Herausfallen aus ihren Klemmhalterungen gesichert sind und dabei ihre axiale Höhenverstellbarkeit nur unwesentlich beeinträchtigt wird. Besonders vorteilhaft ist es, wenn die Klemmkraft gerade so gross gewählt wird, dass eine erfolgte, korrekte Selbstverstellung der axialen Höhe der Blas- und Kalibrierdorne gegen die rückstellende Kraft der Hydraulikflüssigkeit beibehalten wird. Die Klemmkraft wird durch das Anzugsmoment der Halterungen für die Blas- und Kalibrierdorne im balkenartigen Maschinenoberteil festgelegt, das sehr einfach durch das Bedien- bzw. Wartungspersonal einstellbar ist, beispielsweise durch die Verwendung eines geeigneten Drehmomentschlüssels. Der effektive Wert der Klemmkraft hängt dann von der konstruktiven Auslegung der Haltceinrichtung ab.

Im folgenden wird die Erfindung anhand eines in den Fig. dargestellten Ausführungsbeispiels näher erläutert. Es zeigen in z. T. schematischer, nicht-massstabsgetreuer Darstellung:
- Fig. 1: einen Abschnitt der erfindungsgemässe Vorrichtung mit einer Anordnung von drei Blas- und Kalibrierdornen in ihrer Ausgangstellung;
- Fig. 2: die Blas- und Kalibrierdorne aus Fig. 1 nach erfolgter Selbsteinstellung;
- Fig. 3: ein Maschinenoberteil mit einer Anordnung von zwei Blas- und Kalibrierdornen zur Verdeutlichung ihrer schwebenden Halterung; und
- Fig. 4: einen Querschnitt eines Blas- und Kalibricrdorns gemäss Schnittlinie IV-IV in Fig. 3.

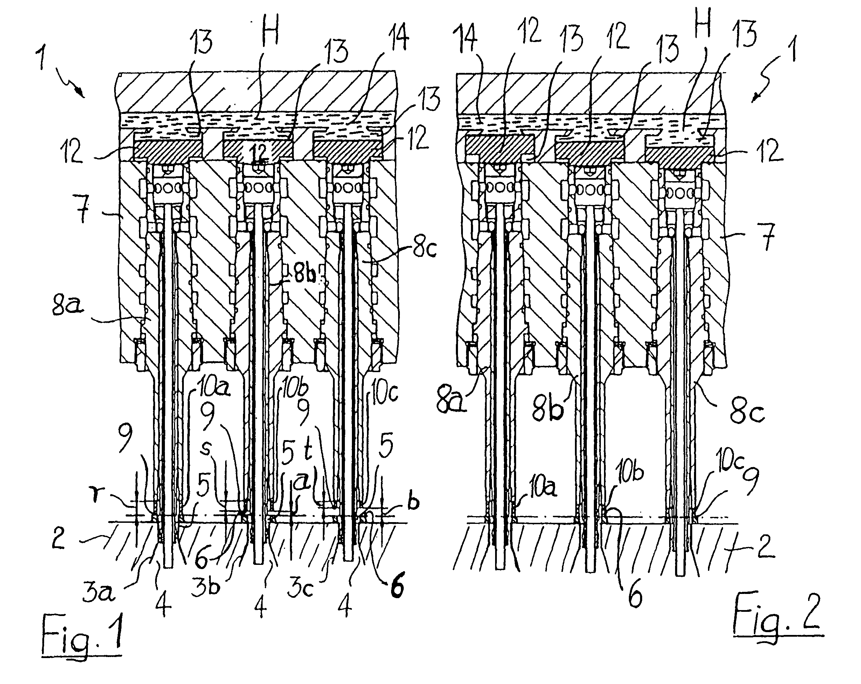

Eine erfindungsgemäss ausgebildete Vorrichtung zur Herstellung von Hohlkörpern, insbesondere Flaschen und dergleichen mit einer Entleeröffnung versehenen Behältnissen, aus thermoplastischem Kunststoff ist in Fig. 1 gesamthaft mit dem Bezugszeichen 1 versehen. Insbesondere handelt es sich bei der Vorrichtung um einen sogenannte Blasformautomaten, in dem der gewünschte Hohlkörper aus einem Vorformling durch Aufblasen in einer Form hergestellt wird. Die Vorrichtung 1 umfasst ein Maschinenunterteil 2 und eine Maschinenoberteil 7. Das Maschinenunterteil 2 ist tischartig ausgebildet und ist mit einer Anzahl von Blasformwerkzeugen ausgestattet, die in der Fig. 1 die Bezugszeichen 3a, 3b und 3c tragen. Die Blasformwerkzeuge 3a, 3b, 3c umschliessen jeweils eine Kavität 4, welche die spätere Form des herzustellenden Hohlkörpers festlegt. Die Kavitäten 4 münden an der Oberseite des tischartigen Maschinenunterteils 2 und weisen dort Mündungen 5 auf, die dem Maschinenoberteil 7 zugewandt sind.

Am balkenanig ausgebildeten Maschinenoberteil 7 sind mehrere Blas- und Kalibrierdorne 8a, 8b, 8c nebeneinander montiert. Die Anzahl der Blas- und Kalibrierdorne 8a, 8b, 8c entspricht der Zahl der Blasformwerkzeuge 3a, 3b, 3c im Maschinenunterteil 2. Dabei ist jeweils ein Blas- und Kalibrierdorn genau einem Blasformwerkzeug zugeordnet. Das Maschinenoberteil 7 ist mit nicht näher dargestellten Zustelleinrichtungen ausgestattet, mit deren Hilfe die Blas- und Kalibrierdorne 8a, 8b, Sc gemeinsam derart axial auf die Blasformwerkzeuge 3a, 3b, 3c zustellbar sind, dass diese mit ihren Kalibrierbereichen in die Mündungen 5 der Blasformwerkzeuge 3a, 3b, 3c eintauchen. Die Zustellbewegung erfolgt solange, bis eine an den Blas- und Kalibrierdornen 8a, 8b, 8c angeordnete, umlaufende Ringschulter 9 mit einer vorgebbaren Kraft gegen eine Gegenfläche 6 presst, die jeweils an den Blasformwerkzeugen 3a, 3b, 3c vorgesehen ist und die Mündung 5 der Kavität 4 bcrandet. Auf diese Weise ist über die Blasformwerkzeuge 3a, 3b, 3c überstehendes Material eines in die Kavität 4 eingesetzten, in Form geblasenen Vorformlings, beispielsweise eines aufgeblasenen ein- oder mehrschichtigen Schlauchs, abquetschbar.

Die Ringschultern 9 sind gemäss dem dargestellten Ausführungsbeispiel an Schneidringen 10a, 10b, 10c vorgesehen, die austauschbar auf den Blas- und Kalibrierdornen 8a, 8b, 8c montiert sind.

Die Schneidringe 10a, 10b, 10c können unterschiedliche Höhen r, s, t aufweisen, die beispielsweise durch Fertigungstoleranzen oder durch unterschiedliche Abnutzung bedingt sind. Die unterschiedlichen Höhen r, s, t der Schneidringe 10a, 10b, 10c sind in Fig. 1 etwas übertrieben dargestellt, um den resultierenden Effekt zu verdeutlichen. Wenn die Ringschulter 9 des Blas- und Kalibrierdoms 8a schon gegen die Gegenfläche 6 des zugeordneten Blasformwerkzeugs 3a gepresst wird, weisen die Ringschultern 9 der anderen beiden Blas- und Kalibrierdorne 8b, 8c von den Gegenflächen 6 der zugeordneten Blasformwerkzeuge 3b, 3c infolge der geringeren Höhen s, t der Schneidringe 10b, 10c noch den Abstand a bzw, b auf. Bei den Vorrichtungen des Stands der Technik müsstc daher in einem umständlichen Justierverfahren die Höhe der Blas- und Kalibrierdorne 8b, 8c verändert werden, um die unterschiedlichen Höhen r, s, t der Schneidringe 10a, 10b, 10c auszugleichen und an allen Blasformwerkzeugen 3a, 3b, 3c ein sicheres Abquetschen überstehenden Materials zu gewährleisten. Dabei ist zu berücksichtigen, dass Blasformautomaten beispielsweise bis zu 10 und auch mehr Blas- und Kalibrierdorne mit zugeordneten Blasformwerkzeugen aufweisen können, um Hohlkörper massentechnisch und kostengünstig herzustellen. Mit der Anzahl der Blas- und Kalibrierdorne steigt natürlich auch der Einstellaufwand. Dies bedingt vielfach längere Stillstandzeiten des Blasformautomaten und ein erhöhtes Risiko für das Bedienpersonal im Fall der Höhenverstellung an der laufenden Maschine.

Bei der erfindungsgemäss ausbebildeten Vorrichtung 1 wirken die Blas- und Kalibrierdorne 8a, 8b, 8c an ihrem im Maschinenoberteil 7 gelagerten Endabschnitt jeweils mit Stellkolben 12 zusammen, die innerhalb von Bohrungen 13 im Maschinenoberteil 7 begrenzt axial verschiebbar sind. Die Bohrungen 13 stehen mit einem Kanal 14 in Verbindung, der als Reservoir für ein Hydraulikflüssigkeit H dient, über welche die Blas- und Kalibrierdorne 8a, 8b, 8c kurzgeschlossen sind. Die Hydraulikflüssigkeit H wird durch die axial verstellten Kolben 12 im Federbereich unter Druck gesetzt.

Durch die Zustellung der Blas- und Kalibrierdorne 8a, 8b, 8c gegen die Blasformwerkzeuge 3a, 3b, 3c sollen die Schultern 9 gegen die Gegenflächen 6 gepresst werden. Sobald die Schulter 9 des ersten Blas- und Kalibrierdorns 8a mit einer bestimmten Kraft gegen die Gegenfläche 6 des zugeordneten Blasformwerkzeugs 3a gepresst wird, verschiebt sich der Blas- und Kalibrierdorn 8a axial und der Stellkolben 12 wandert nach oben. Die axiale Verschiebung erfolgt dabei gegen den Widerstand der Hydraulikflüssigkeit. Der auf die Hydraulikflüssigkeit H übertragene Druck wird infolge des Kurzschlusses auf die Stellkolben 12 der anderen Blas- und Kalibrierdorne 8b, 8c verteilt, wodurch diese mehr oder weniger weit gegenüber ihrer Ausgangsstellung axial verschoben werden.

Fig. 2 zeigt die Lage der Blas- und Kalibrierdorne 8a, 8b, 8c nach der Selbsteinstellung. Der Blas- und Kalibrierdorn 8a mit dem Schneidring 10a mit der grössten Höhe r ist nach rückwärts, in das Maschinenoberteil 7 hinein, versetzt worden. Durch den auf die Hydraulikflüssigkeit H ausgeübten Druck ist dafür der Blas- und Kalibrierdorn 8c mit dem Schneidring 10c mit der geringsten Höhe t in die entgegengesetzte Richtung, gegen das zugeordnete Blasformwerk 3c, ausgeschoben worden. Der mittlere Blas- und Kalibrierdorn 8b hat seine axiale Lage im wesentlichen beibehalten und gibt mit der Lage seiner Ringschulter 9 die Solllage der übrigen Ringschultern vor. Die axiale Höhenverstellbarkeit der Blas- und Kalibrierdorne 8a, 8b, 8c gegenüber ihrer Ausgangstellung beträgt beispielsweise etwa ± 4 mm. In einer Variante der Erfindung kann der axiale Verstellbereich zu etwa ± 2,5 mm gewählt sein. Es versteht sich, dass auch grösserc Höhenverstellbereiche vorgesehen sein können. Die Hydraulikflüssigkeit H weist eine gewisse elastische Kompressibilität auf, die bei der Krafteinleitung über die Kolben 12 eine gewisse Dämpfung bewirkt.

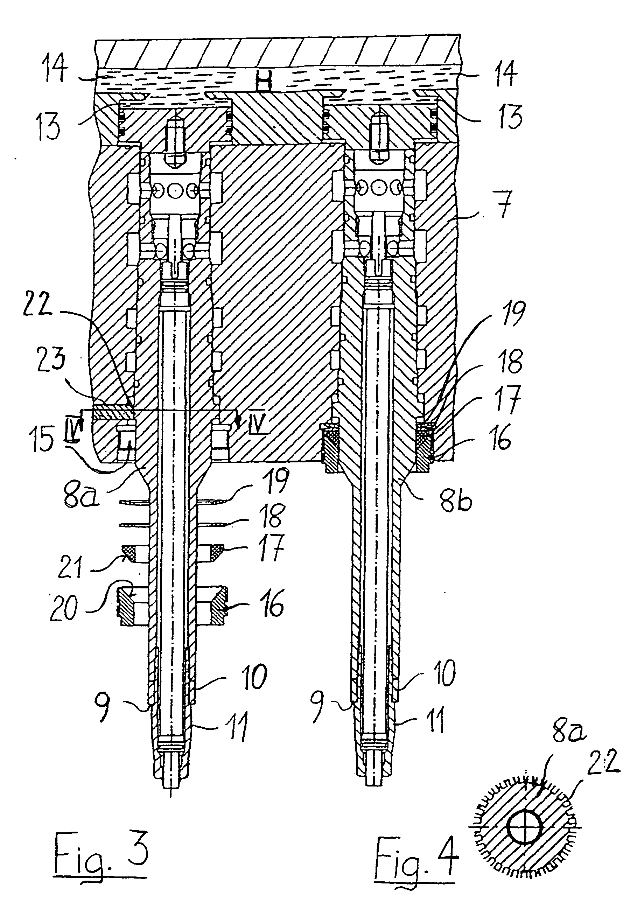

Fig. 3 zeigt einen Abschnitt des Maschinenoberteils 7 mit zwei der vorzugsweise in Reihe angeordneten Blas- und Kalibrierdornen 8a, 8b in vergrössertem Massstab. Dabei tragen gleiche Bauteile die gleichen Bezugszeichen wie in Fig. 1 und 2. Der linke Blas- und Kalibrierdorn 8a ist zur Verdeutlichung des Aufbaus seiner schwebenden Halterung in auseinandergezogener Stellung dargestellt. Am rechten Blas- und Kalibrierdorn 8b sind die Elemente seiner Halterung im zusammengebauten Zustand gezeigt. Gemäss dem dargestellten Ausführungsbeispiel sind die Blas- und Kalibrierdorne 8a, 8b durch eine Klemmhalterung schwebend und axial begrenzt verschiebbar am balkenartigen Maschinenoberteil 7 befestigt. Die Klemmhalterung besteht aus einer Haltemutter 16, die mit einem Aussengewinde versehen ist und in eine Gewindebohrung 15 im Maschinenoberteil 7 einschraubbar ist. Die Haltemutter 16 wirkt über eine Kegelfläche 20 mit einem radial komprimierbaren Klemmelement 17 zusammen. Vorzugsweise ist das Klemmelement 17 ein geschlitzter Kegel aus einem elastischen und verschleissfesten Material, beispielsweise einem technischen Kunststoff. Der Kegel ist mit einer Gegenfläche 21 ausgestattet. Die Haltemutter 16 und das Klemmelement 17 werden durch eine Tellerfeder 19 unter Vorspannung gehalten, die sich einerseits in der Gewindebohrung 15 und andererseits an einer Unterlagscheibe 18 abstützt, die zwisehen der Tellerfeder 19 und dem Klemmelement 17 angeordnet ist.

Die Haltmutter 16 wird mit einem vorgegebenen Anzugsmoment in die Gewindebohrung 15 eingeschraubt. Beispielsweise wird dazu ein Drehmomentschlüssel eingesetzt. Die auf die Blas- und Kalibrierdorne 8a, 8b übertragene Klemmkraft ist abhängig von der Kraftübersetzung durch die Kegelflächen 20, 21 und der Dimension des Klemmelements 17. Die effektive Klemmkraft hängt auch von den Reibbeiwerten der zusammenwirkenden Flächen der Blas- und Kalibrierdorne 8a, 8b und der Klemmelemente 17 ab. In jedem Fall muss die Klemmkraft wenigstens gross genug sein, dass die Blas- und Kalibrierdorne 8a, 8b nicht aus ihren Halterungen am Maschinenoberteil 7 fallen, sondern schwebend gehalten bleiben. Mit Vorteil ist die Klemmkraft gerade so gross, dass die selbsttätige axiale Verstellung der Blas- und Kalibrierdorne 8a, 8b durch die beim Zustellen auf den Maschinenunterteil auftretenden hydraulischen Kräfte nicht nennenswert behindert wird. Andererseits reicht die Klemmkraft aus, dass die Blas- und Kalibrierdorne 8a, 8b sich durch ihr Gewicht und die dynamischen Kräfte bei den Bewegungsvorgängen nicht ungewollt verstellen. Das Anzugsmoment für die Haltemutter 16 ist direkt vom gewälten Kegelwinkel abhängig. Dabei wird als Ergebnis eine Reibkraft angestrebt, die grösser ist als die Massenkräfte und trotzdem noch eine Verschiebung der Blas- und Kalibrierdorne 8a, 8b durch die Reaktionskraft beim Abquetschen ermöglicht. In einer Variante der Erfindung wird das Anzugsmoment beispielsweise zu etwa 20 Nm bis etwa 40 Nm, vorzugsweise etwa 25 Nm bis 35 Nm, besonders bevorzugt etwa 31 Nm, gewählt.

Der vordere Kalibrierbereich der Blas- und Kalibrierdorne 8a, 8b ist gemäss dem dargestellten Ausführungsbeispiel jeweils von einer auswechselbar montierten, beispielsweise eingeschraubten, Kalibrierhülse 11 gebildet. Dadurch kann diese bei Bedarf einfach ausgewechselt und ersetzt werden. Die Schneidringe 10 sind gleichfalls auswechselbar montiert und stützen sich an einem freien Vorderende des Blas- und Kalibrierdoms 8a, 8b und an einer Schulter am Umfang der Kalibrierhülse 11 ab.

Wegen der schwebenden Halterung der Blas- und Kalibrierdorne 8a, 8b besteht auch die Möglichkeit, bei Bedarf vom kreisförmigen Querschnitt abweichende, beispielsweise elliptische, Kalibrierhülsen 11 zu montieren und sehr einfach auf die Kavitäten in den Blasformwerkzeugen auszurichten, damit insbesondere die Achsen der Blas- und Kalibrierdorne 8a, 8b mit den Halsachsen der Kavitäten übereinstimmen. Dazu sind Positioniermittel vorgesehen, die ein kontrolliertes Vcrdrehen der Blas- und Kalibrierdorne um ihre Längsachse ermöglichen. Die Positioniermittel umfassen einen Stellstift 23 im Maschinenoberteil 7, der mit einer Umfangsrändelung oder Aussenverzahnung 22 an den Blas- und Kalibrierdornen 8a zusammenwirkt, die in Fig. 4 angedeutet ist. Die Umfangsrändelung oder -verzahnung 22 kann eine gleichmässige oder auch eine ungleichmässige Teilung aufweisen, um den Blas- und Kalibrierdorn 8a in vorgegebenen, auch grösseren Schritten verdreht zu justieren. Der Stellstift 23 dient zur Festlegung des ausgerichteten Blas- und Kalibrierdoms 8a in der eingestellten Position.

## Patentansprüche

1. Vorrichtung zur Herstellung von Hohlkörpern, insbesondere Flaschen und dergleichen mit einer Entleeröffnung versehenen Behältnissen, aus thermoplastischem Kunststoff mit einem Maschinenunterteil (2), das wenigstens zwei, jeweils mit einer Kavität (4) versehene Blasformwerkzeuge (3a, 3b, 3c) aufweist, und einem oberhalb des Maschinenunterteils (2) angeordneten, balkenartigen Maschinenoberteil (7), an dem eine der Zahl der Blasformwerkzeuge (3a, 3b, 3c) entsprechende Anzahl von Blas- und Kalibrierdornen (8a, 8b, 8c) angeordnet ist, die jeder einem Blasformwerkzeug zugeordnet sind und gemeinsam axial auf die Blasformwerkzeuge zustellbar und mit ihrem Kalibrierbereich in eine Mündung (5) der Kavitäten (4) einfahrbar sind, bis eine Ringschulter (9) an den Blas- und Kalibrierdornen (8a, 8b, 8c) in Anlage zu einer Gegenfläche (6) am jeweils zugeordneten Blasformwerkzeug (3a, 3b, 3c) kommt, **dadurch gekennzeichnet, dass** die Blas- und Kalibrierdorne (8a, 8b, 8c) innerhalb vorgebbarer Grenzen axial frei beweglich im Maschinenoberteil (7) gehaltert sind und beim Zustellen der Blas- und Kalibrierdorne (8a, 8b, 8c) gegen die Blasformwerkzeuge (3a, 3b, 3c) gegen den Widerstand eines Kopplungsmittels (H) automatisch gegenüber ihrer Ausgangsstellung axial höhenverstellbar sind.

2. Vorrichtung nach Anspruch 1, **dadurch gekennzeichnet, dass** die Blas- und Kalibrierdorne (8a, 8b, 8c) hydraulisch miteinander gekoppelt sind.

3. Vorrichtung nach Anspruch 2, **dadurch gekennzeichnet, dass** die Blas- und Kalibrierdorne (8a, 8b, 8c) mit Stellkolben (12) zusammenwirken, die innerhalb von Bohrungen (13) im Maschinenoberteil (7) begrenzt axial verschiebbar sind und durch eine innerhalb eines mit den Bohrungen (13) in Verbindung stehenden Reservoirs (14) angeordnete Hydraulikflüssigkeit (H), welche das Kopplungsmittel bildet, miteinander kurzgeschlossen sind.

4. Vorrichtung nach einem der vorangehenden Ansprüche, **dadurch gekennzeichnet, dass** die axiale Höhenverstellbarkeit der Blas- und Kalibrierdorne (8a, 8b, 8c) gegenüber ihrer Ausgangsstellung beispielsweise bis etwa ± 4 mm, vorzugsweise bis etwa ± 2,5 mm beträgt.

5. Vorrichtung nach einem der vorangehenden Ansprüche, **dadurch gekennzeichnet, dass** die Blas- und Kalibrierdorne (8a, 8b, 8c) durch Klemmung in Halterungen im balkenartigen Maschinenoberteil (7) gehaltert und lösbar fixiert sind.

6. Vorrichtung nach Anspruch 5, **dadurch gekennzeichnet, dass** alle Blas- und Kalibrierdorne (8a, 8b, 8c) im wesentlichen mit der gleichen Klemmkraft in ihren Halterungen fixiert sind.

7. Vorrichtung nach Anspruch 5 oder 6, **dadurch gekennzeichnet, dass** die Klemmhalterung für die Blas- und Kalibrierdorne (8a, 8b, 8c) eine in eine Gewindebohrung (15) am oberen Maschinenteil (7) einschraubbare Haltemutter (16) mit einem Aussengewinde umfasst, die über eine Kegelfläche (20) mit einem radial komprimierbaren Klemmelement (17), vorzugsweise einem mit einer konischen Gegenfläche (21) versehenen, geschlitzten Kegel aus einem elastischen und verschleissfesten Material, vorzugsweise einem technischen Kunststoff, zusammenwirkt.

8. Vorrichtung nach Anspruch 7, **dadurch gekennzeichnet, dass** die Klemmhalterung ein Vorspannelement (19) umfasst, dass vorzugsweise von einer Tellerfeder gebildet ist, die sich im zusammengefügten Zustand einerseits in der Gewindebohrung (15) und andererseits, gegebenenfalls unter Zwischenlage einer Unterlagscheibe (18), am Klemmelement (17) abstützt.

9. Vorrichtung nach einem der vorangehenden Ansprüche, **dadurch gekennzeichnet, dass** die Blas- und Kalibrierdorne (8a, 8b, 8c) um ihre Längsachse verdrehbar im Maschinenoberteil (7) gehaltert sind.

10. Vorrichtung nach Anspruch 9, **dadurch gekennzeichnet, dass** für die Verdrchung jedes Blas- und Kalibrierdorns (8a) um seine Längsachse Positioniermittel vorgesehen sind, die vorzugsweise eine Umfangsrändelung oder -verzahnung (22) an den Blas- und Kalibrierdornen (8a) und einen von aussen betätigbaren Stellstift (23) am Maschinenoberteil (7) umfassen.

11. Vorrichtung nach einem der vorangehenden Ansprüche, **dadurch gekennzeichnet, dass** die Anschlagschulter (9) an jedem Blas- und Kalibrierdorn (8a, 8b, 8c) an einem auswechselbar gehalterten Schneidring (10) vorgesehen ist.

12. Vorrichtung nach einem der vorangehenden Ansprüche, **dadurch gekennzeichnet, dass** jeder kalibrierende Abschnitt der Blas- und Kalibrierdorne (8a, 8b, 8c) von einer austauschbaren Kalibrierhülse (11) gebildet ist.

13. Verfahren zur Herstellung von Hohlkörpern, insbesondere von Flaschen oder dergleichen mit einer Entleeröffnung versehenen Behältnisse, in einem Hohlkörperblasverfahren, bei dem ein- oder mehrschichtig extrudierte Vorformlinge aus einem thermoplastischen Kunststoff, beispielsweise Abschnitte eines Schlauchs, in Blasformwerkzeuge (3a, 3b, 3c) eingebracht werden, dann gleichzeitig mittels eines jedem Blasformwerkzeug (3a, 3b, 3c) zugeordneten Blas- und Kalibrierdoms (8a, 8b, 8c) gemäss den von den Blasformwerkzeugen umschlossenen Kavitäten (4) durch Überdruck aufgeblasen werden, wobei die Entlceröffnungen der Hohlkörper kalibriert und über die Entleerstutzen überstehende Teile abgequetscht werden, und schliesslich die ausgeformten Hohlkörper durch Kühlung ausgehärtet werden, **dadurch gekennzeichnet, dass** die Blas- und Kalibrierdorne (8a, 8b, 8c) während des Abquetschvorgangs, bei dem eine umlaufende Ringschulter (9) am Blas- und Kalibrierdorn jeweils gegen eine Gegenfläche (6) am zugeordneten Blasformwerkzeug gepresst wird, innerhalb vorgebbarer Grenzen, gegen die rückstellende Kraft eines Kopplungsmittels (H), automatisch gegenüber ihrer Ausgangslage axial höhenverstellt werden.

14. Verfahren nach Anspruch 13, **dadurch gekennzeichnet, dass** die axiale Höhenverstellung der Blas- und Kalibrierdorne (8a, 8b, 8c) derart erfolgt, dass der von jeder Ringschulter (9) auf die zugehörige Gegenfläche (6) ausgeübte Druck gleich gross ist.

15. Verfahren nach Anspruch 13 oder 14, **dadurch gekennzeichnet, dass** als Kopplungsmittel eine im Federbereich betriebene Hydraulikflüssigkeit (H) eingesetzt wird, durch welche die Blas- und Kalibrierdorne (8a, 8b, 8c) miteinander kurzgeschlossen werden.

16. Verfahren nach einem der Ansprüche 13 - 15, **dadurch gekennzeichnet, dass** die Blas- und Kalibrierdorne 8a, 8b, 8c) durch Klemmung in einer Halterung eines balkenartig ausgebildeten, Maschinenoberteils (7) eines Blasformautomaten gehaltert werden, wobei jeder Blas- und Kalibrierdorn (8a, 8b, 8c) mit der gleichen Klemmkraft gehalten wird.

17. Verfahren nach Anspruch 16, **dadurch gekennzeichnet, dass** die Klemmkraft derart gewählt wird, dass die Blas- und Kalibrierdorne (8a, 8b, 8c) gegen ein Verstellen infolge ihres Gewichts und der dynamischen Kräfte bei den Bewegungsvorgängen gesichert sind, andererseits ein Verstellen durch die Einwirkung hydraulischer Kräfte ermöglicht wird.

## Claims

1. Apparatus for the production of hollow bodies, in particular bottles and the like with containers provided with an emptying opening, of thermoplastics material with a machine lower part (2) that comprises at least two blowing moulds (3a, 3b, 3c) provided in each case with a cavity (4), and a beam-like machine upper part (7) arranged above the machine lower part (2), on which upper part is arranged a number of blowing and calibration mandrels (8a, 8b, 8c) corresponding to the number of blowing moulds (3a, 3b, 3c), each of which mandrels is associated with a blowing mould and can be fed jointly axially onto the blowing moulds and can be driven with their calibration region into a mouth (5) of the cavities (4) up to an annular shoulder (9) on the blowing and calibration mandrels (8a, 8b, 8c) so as to engage a counter-surface (6) on the in each case associated blowing mould (3a, 3b, 3c), **characterised in that** the blowing and calibration mandrels (8a, 8b, 8c) are held in an axially freely movable manner within predeterminable limits in the machine upper part (7) and when the blowing and calibration mandrels (8a, 8b, 8c) are fed towards the blowing moulds (3a, 3b, 3c) against the resistance of a coupling means (H) their height can automatically be adjusted axially with respect to their initial position.

2. Apparatus according to claim 1, **characterised in that** the blowing and calibration mandrels (8a, 8b, 8c) are hydraulically coupled to one another.

3. Apparatus according to claim 2, **characterised in that** the blowing and calibration mandrels (8a, 8b, 8c) cooperate with adjustment pistons (12) that are limitedly axially displaceable within bores (13) in the machine upper part (7) and are short-circuited to one another by an hydraulic fluid (H), forming the coupling means, the hydraulic fluid being contained within a reservoir (14) that is in communication with the bores (13).

4. Apparatus according to one of the preceding claims, **characterised in that** the axial height adjustability of the blowing and calibration mandrels (8a, 8b, 8c) with respect to their initial position is for example up to about ±4 mm, preferably up to about ±2.5 mm.

5. Apparatus according to one of the preceding claims, **characterised in that** the blowing and calibration mandrels (8a, 8b, 8c) are held and detachably fixed by clamping in holding devices in the beam-type machine upper part (7).

6. Apparatus according to claim 5, **characterised in that** all blowing and calibration mandrels (8a, 8b, 8c) are fixed substantially with the same clamping force in their holding devices.

7. Apparatus according to claim 5 or 6, **characterised in that** the clamping holding device for the blowing and calibration mandrels (8a, 8b, 8c) comprises a holding nut (16) with an external thread that can be screwed into a threaded bore (15) on the upper machine part (7), which holding nut co-operates via a conical surface (20) with a radially compressible clamping element (17), preferably with a slotted cone of an elastic and wear-resistant material, particularly preferably an industrial plastics material, provided with a conical counter-surface (21).

8. Apparatus according to claim 7, **characterised in that** the clamping holding device comprises a tensioning element (19) that is preferably formed by a cup spring that in the assembled state is supported on the one hand in the threaded bore (15) and on the other hand, optionally under the interpositioning of a supporting disc (18), on the clamping element (17).

9. Apparatus according to one of the preceding claims, **characterised in that** the blowing and calibration mandrels (8a, 8b, 8c) are rotatably held about their longitudinal axis in the machine upper part (7).

10. Apparatus according to claim 9, **characterised in that** for the rotation of each blowing and calibration mandrel (8a) about its longitudinal axis, positioning means are provided that preferably comprise a circumferential knurled or toothed profile (22) on the blowing and calibration mandrels (8a) and an externally actuable adjustment pin (23) on the machine upper part (7).

11. Apparatus according to one of the preceding claims, **characterised in that** the bearing shoulder (9) on each blowing and calibration mandrel (8a, 8b, 8c) is provided on a replaceably mounted die ring (10).

12. Apparatus according to one of the preceding claims, **characterised in that** each calibrating section of the blowing and calibration mandrels (8a, 8b, 8c) is formed by an exchangeable calibration sleeve (11).

13. Process for the production of hollow bodies, in particular of bottles or similar containers provided with an emptying opening, in a hollow body blowing process, in which single-layer or multilayer extruded preforms of a thermoplastics material, for example sections of a flexible tube, are inserted into blowing moulds (3a, 3b, 3c), and are then simultaneously blown by excess pressure by means of a blowing and calibration mandrel (8a, 8b, 8c) associated with each blowing mould (3a, 3b, 3c), according to the cavities (4) enclosed by the blowing moulds, in which the emptying openings of the hollow bodies are calibrated and parts extending beyond the emptying pipes are squeezed off, and finally the formed hollow bodies are hardened by cooling, **characterised in that** the blowing and calibration mandrels (8a, 8b, 8c) are automatically axially adjusted in height with respect to their initial position during the squeezing-off procedure, in which a surrounding annular shoulder (9) on the blowing and calibration mandrel is pressed in each case against a counter-surface (6) on the associated blowing mould, within predeterminable limits, against the restoring force of a coupling means (H).

14. Process according to claim 13, **characterised in that** the axial height adjustment of the blowing and calibration mandrels (8a, 8b, 8c) is carried out in such a way that the pressure exerted by each annular shoulder (9) on the associated counter-surface (6) is equally large.

15. Process according to claim 13 or 14, **characterised in that** an hydraulic fluid (H) operating in the spring range is used as coupling means, by means of which the blowing and calibration mandrels (8a, 8b, 8c) are short-circuited with one another.

16. Process according to one of claims 13 to 15, **characterised in that** the blowing and calibration mandrels (8a, 8b, 8c) are held by clamping in a holding device of a beam-type machine upper part (7) of an automatic blow moulding machine, in which each blowing and calibration mandrel (8a, 8b, 8c) is held with the same clamping force.

17. Process according to claim 16, **characterised in that** the clamping force is chosen so that the blowing and calibration mandrels (8a, 8b, 8c) are secured against an adjustment on account of their weight and the dynamic forces during the adjustment procedures, though an adjustment movement due to the action of hydraulic forces is allowed.

## Revendications

1. Dispositif pour la fabrication de corps creux, en particulier de bouteilles ou récipients similaires en matière synthétique thermoplastique comportant une ouverture de vidage, comportant une partie inférieure de machine (2) qui présente au moins deux outils de soufflage sur matrice (3a, 3b, 3c) munis chacun d'une cavité (4) et, disposée au-dessus de la partie inférieure de machine (2), une partie supérieure de machine (7) en forme de poutre sur laquelle est disposé un nombre de mandrins de soufflage et de calibrage (8a, 8b, 8c) correspondant au nombre d'outils de soufflage sur matrice (3a, 3b, 3c) dont chacun est associé à un outil de soufflage sur matrice et qui peuvent être réglés ensemble en sens axial sur les outils de soufflage sur matrice et introduits par leur partie calibrage dans une embouchure (5) des cavités (4) jusqu'à ce qu'un épaulement annulaire (9) sur les mandrins de soufflage et de calibrage (8a, 8b, 8c) vienne en appui contre une surface opposée (6) sur chaque outil de soufflage sur matrice (3a, 3b, 3c) associé, **caractérisé en ce que** les mandrins de soufflage et de calibrage (8a, 8b, 8c) sont maintenus dans la partie supérieure de machine (7) de manière librement mobile à l'intérieur de limites pouvant être prescrites et sont automatiquement réglables en hauteur par rapport à leur position initiale lors du positionnement des mandrins de soufflage et de calibrage (8a, 8b, 8c) contre les outils de soufflage sur matrice (3a, 3b, 3c) contre la résistance d'un moyen d'accouplement (H).

2. Dispositif selon la revendication 1, **caractérisé en ce que** les mandrins de soufflage et de calibrage (8a, 8b, 8c) sont couplés hydrauliquement les uns aux autres.

3. Dispositif selon la revendication 2, **caractérisé en ce que** les mandrins de soufflage et de calibrage (8a, 8b, 8c) interagissent avec des pistons de réglage (12) qui peuvent se déplacer en sens axial sur une course limitée à l'intérieur d'alésages (13) dans la partie supérieure de machine (7), et qui sont mis en court-circuit les uns avec les autres par un fluide hydraulique (H) disposé à l'intérieur d'un réservoir (14) communiquant avec les alésages (13).

4. Dispositif selon une des revendications précédentes, **caractérisé en ce que** la possibilité de réglage en hauteur des mandrins de soufflage et de calibrage (8a, 8b, 87c) par rapport à leur position initiale s'élève à environ ± 4 mm, de préférence à environ ± 2,5 mm.

5. Dispositif selon une des revendications précédentes, **caractérisé en ce que** les mandrins de soufflage et de calibrage (8a, 8b, 8c) sont maintenus et fixés de manière amovible par serrage dans des supports dans la partie supérieure de machine (7).

6. Dispositif selon la revendications 5, **caractérisé en ce que** tous les mandrins de soufflage et de calibrage (8a, 8b, 8c) sont fixés dans leur support sensiblement avec la même force de serrage.

7. Dispositif selon la revendication 5 ou 6, **caractérisé en ce que** le support de serrage des mandrins de soufflage et de calibrage (8a, 8b, 8c) comprend un écrou de retenue (16) comportant un filetage extérieur pouvant être vissé dans un alésage fileté (15) sur la partie supérieure de machine (7), et qui interagit avec un élément de serrage (17) pouvant être comprimé dans le sens radial par l'intermédiaire d'une surface conique (20), de préférence un cône fendu muni d'une contre-surface conique (21) constitué d'un matériau élastique et résistant à l'usure, de préférence d'une matière plastique industrielle.

8. Dispositif selon la revendications 7, **caractérisé en ce que** le support de serrage comprend un élément de précontrainte (9), qui est de préférence constitué d'une rondelle Belleville, qui prend appui à l'état assemblé d'une part dans l'alésage fileté (15) et d'autre part, le cas échéant en intercalant une rondelle plate (18), sur l'élément de serrage (17).

9. Dispositif selon une des revendications précédentes, **caractérisé en ce que** les mandrins de soufflage et de calibrage (8a, 7b, 8c) sont maintenus dans la partie supérieure de machine (7) de manière à pouvoir tourner autour de leur axe longitudinal.

10. Dispositif selon la revendication 9, **caractérisé en ce que** sont prévus pour la rotation de chaque mandrin de soufflage et de calibrage (8a, 8b, 8c) autour de son axe longitudinal des mayens de positionnement qui comprennent de préférence une denture ou un moletage circonférentiel (22) au niveau des mandrins de soufflage et de calibrage (8a, 8b, 8c) et une goupille de réglage (23) pouvant être actionnée de l'extérieur au niveau de la partie supérieure de machine (7).

11. Dispositif selon une des revendications précédentes, **caractérisé en ce que** l'épaulement d'arrêt (9) au niveau de chaque mandrin de soufflage et de calibrage (8a, 8b, 8c) est prévu sur une bague coupante (10) fixée de manière amovible.

12. Dispositif selon une des revendications précédentes, **caractérisé en ce que** chaque partie calibrage des mandrins de soufflage et de calibrage (8a, 8b, 8c) est constituée d'une douille de calibrage (11) pouvant être remplacée.

13. Procédé pour la fabrication de corps creux , en particulier de bouteilles ou de récipients similaires comportant une ouverture de vidage, par un procédé de soufflage de corps creux, qui consiste à introduire des préformes extrudées monocouches ou multicouches constituées d'une matière synthétique thermoplastique, par exemple des tronçons d'un tuyau, dans des outils de soufflage sur matrice (3a, 3b, 3c), puis à les souffler simultanément par surpression d'après les cavités (4) définies par les outils de soufflage et de calibrage au moyen d'un mandrin de soufflage et de calibrage (8a, 8b, 8c) associé à chaque outil de soufflage sur matrice (3a, 3b, 3c), moyennant quoi les ouvertures de vidage des corps creux sont calibrées et la partie excédentaire au-dessus des manchons de vidage est écrasés, et enfin à durcir par refroidissement les corps creux formés, **caractérisé en ce que** pendant l'opération d'écrasement, au cours de laquelle un épaulement annulaire (9) sur le mandrin de soufflage et de calibrage est comprimé contre une contre-surface (6) sur l'outil de soufflage sur matrice associé, les mandrins de soufflage et de calibrage (8a, 8b, 8c) sont automatiquement réglés en hauteur dans le sens axial par rapport à leur position initiale à l'encontre de la force de retour d'un moyen d'accouplement (H) à l'intérieur de limites pouvant être prescrites.

14. Procédé selon la revendication 13, **caractérisé en ce que** le réglage en hauteur des mandrins de soufflage et de calibrage (8a, 8b, 8c) dans le sens axial s'effectue de telle façon que la pression exercée par chaque épaulement annulaire (9) sur la contre-surface (6) concernée est égale.

15. Procédé selon la revendication 13 ou 14, **caractérisé en ce que** l'on utilise comme moyen d'accouplement un fluide hydraulique (H) entraîné dans la zone élastique, par lequel les mandrins de soufflage et de calibrage (8a, 8b, 8c) sont mis en court-circuit les uns avec les autres.

16. Procédé selon une des revendications 13 à 15, **caractérisé en ce que** les mandrins de soufflage et de calibrage (8a, 8b, 8c) sont maintenus par serrage dans un support d'une partie supérieure de machine (7) conçue en forme de poutre d'un automate de soufflage sur matrice, chaque mandrin de soufflage et de calibrage (8a, 8b, 8c) étant maintenu avec la même force de serrage.

17. Procédé selon la revendication 16, **caractérisé en ce que** la force de serrage est choisie de telle manière que les mandrins de soufflage et de calibrage (8a, 8b, 8c) sont assurés contre un réglage dû à leur poids et aux forces dynamiques lors des processus de déplacement, et que d'autre part un réglage sous l'effet des forces hydrauliques est possible.
